# EUROPEAN PATENT APPLICATION

(11) **EP 4 716 359 A1**
(43) Date of publication of application: **25.03.2026**
(21) Application number: 25189033.1
(22) Date of filing: 11.07.2025
(51) Int. Cl.: H04W 84/12, H04W 24/02, H04W 76/10

(54) **SERVER-BASED SETTING OF WIRELESS LOCAL AREA NETWORK (WLAN) PARAMETERS**

(30) Priority: 22.09.2024 US 202418892427
(71) Applicant: INTEL Corporation, Santa Clara, CA 95054 (US)
(72) Inventor: KENNEY, Thomas J., Portland, 97229 (US); CARIOU, Laurent, 29290 Milizac (FR)
(74) Representative: Viering, Jentschura & Partner mbB Patent- und Rechtsanwälte

(57) **Abstract**

For example, an apparatus may include logic and circuitry configured to cause a parameter-setting server to establish a connection with a Wireless Local Area Network (WLAN) station (STA). For example, the parameter-setting server may be configured to send WLAN parameter-setting information to the WLAN STA via the connection with the WLAN STA. For example, the WLAN parameter-setting information may be configured to indicate a setting of one or more WLAN parameters to be implemented by the WLAN STA for communication in a WLAN. For example, the WLAN STA may be configured to process the WLAN parameter-setting information from the parameter-setting server to identify the setting of the one or more WLAN parameters to be implemented by the WLAN STA. For example, the WLAN STA may be configured to communicate one or more transmissions in the WLAN, for example, according to the setting of the one or more WLAN parameters.

## Description

### BACKGROUND

A Wireless Local Area network (WLAN) may include an Access Point (AP), which may communicate with one or more non-AP stations. For example, an AP and a non-AP station may be required to communicate, for example, according to a WLAN communication standard.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic flow-chart illustration of a method of server-based setting of Wireless Local Area Network (WLAN) parameters, in accordance with some demonstrative aspects.
Fig. 3 is a schematic flow-chart illustration of a method of server-based setting of WLAN parameters, in accordance with some demonstrative aspects.
Fig. 4 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020);* IEEE 802.11be (*IEEE P802.11be*/*D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023);* and/or IEEE802.11bn (*IEEE 802.11bn, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications - Amendment: Enhancements for Ultra High Reliability (UHR)*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S 1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16GHz channels. For example, the channel bonding mechanisms may include, for example, a mechanism and/or an operation whereby two or more channels, e.g., 2.16GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32GHz, a channel BW of 6.48GHz, a channel BW of 8.64GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

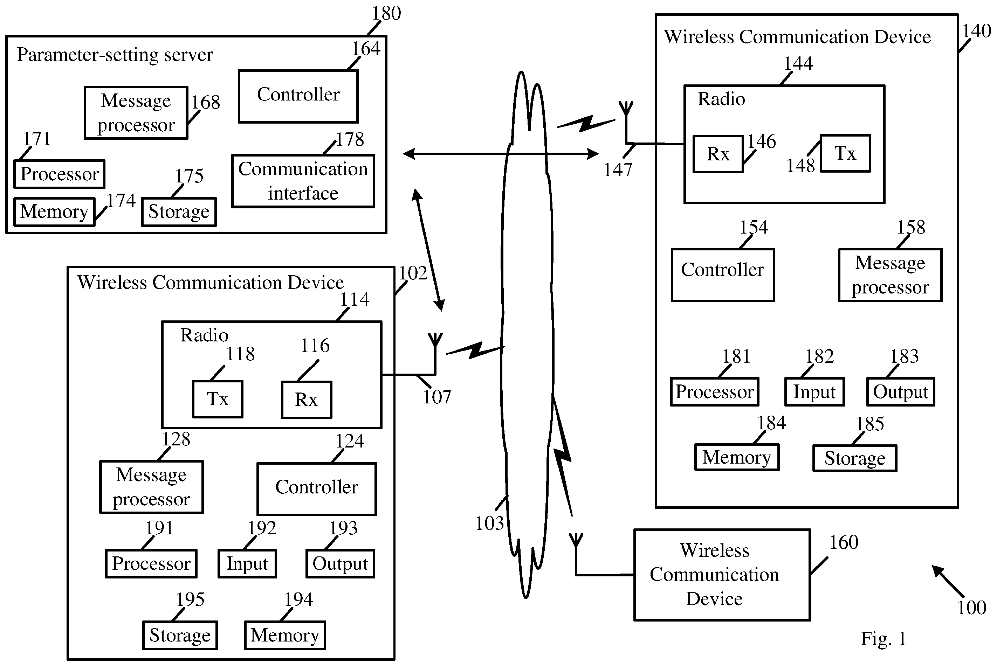

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10GHz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a Wi-Fi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a Wi-Fi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11be Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may be configured to implement one or more settings, features, operations and/or functionalities in accordance with one or more protocols and/or standards, for example, in accordance with one or more *IEEE 802.11 Standards.*

For example, features and/or concepts for wireless communication according to wireless communication standards, e.g., supported features and/or candidate features defined according to the *IEEE 802.11 Standards,* are getting more and more complex and advanced. This may make it more and more difficult to evaluate concepts during a standardization process.

For example, it may be difficult to verify whether features and/or concepts, which may be defined for wireless communication according to wireless communication standards, actually perform as planned, for example, in one or more, e.g., many, scenarios, e.g., when the features are actually deployed on the field.

For example, there may be a growing disparity between simulations of new features and actually performance of the new features in real deployments. For example, there may be a growing mistrust whether simulations properly reflect reality, e.g., especially for complex MAC features that are designed to better operate in dense environments.

For example, protocols in accordance with the *IEEE 802.11 Standards* may be designed to define one or more mechanisms and/or parameters in a relatively conservative manner, e.g., in a very conservative manner, for example, in attempt to ensure these mechanisms and/or parameters do not behave in a destructive manner in the field, for example, even if simulations show that the deployment should be fine.

For example, this conservative approach for defining features may lead to a definition of feature disable mechanisms, which may be inefficient, e.g., by definition, inefficient, e.g., as such feature disable mechanisms may be governed on an AP-basis. For example, although an AP may disable a feature, other neighboring APs in a neighborhood of the AP can still be able to use the feature, which has been disabled by the AP.

For example, the conservative approach for defining features may lead to parameter selections that are relatively, e.g., overly, conservative.

For example, the conservative parameter selection may impact performance of a mechanism, e.g., defined in accordance with the *IEEE 802.11 Standards.*

For example, the conservative parameter selection may result in promising mechanisms not being defined, for example, by fear that these mechanisms would be uncontrolled.

In some demonstrative aspects, device 102, device 140, and/or device 160 may be configured to implement one or more operations and/or functionalities of a WLAN parameter-setting mechanism, which may be configured to support a server-based setting of one or more WLAN parameters, e.g., as described below.

In some demonstrative aspects, the WLAN parameter-setting mechanism may be configured to provide a technical solution to set one or more WLAN parameters to be used by device 102, device 140, device 160, and/or any other wireless communication device to communicate one or more transmissions in a WLAN, e.g., as described below.

In some demonstrative aspects, device 102, device 140, and/or device 160 may be configured to implement one or more operations and/or functionalities of a WLAN parameter-setting mechanism, which may be configured to provide a technical solution support more aggressive features to be defined with one or more WLAN parameters, for example, WLAN parameters that can be selected to push mechanisms to a more efficient work scope, e.g., as described below.

In some demonstrative aspects, device 102, device 140, and/or device 160 may be configured to implement one or more operations and/or functionalities of a WLAN parameter-setting mechanism, which may be configured to provide a technical solution to support a possibility to modify one or more WLAN parameters of one or more WLAN features, and/or to selectively enable and/or disable the one or more WLAN features, for example, after the one or more WLAN features are introduced on the field, either everywhere or in a selective manner, for example, depending on the location of a wireless communication device and/or a WLAN system, e.g., as described below.

In some demonstrative aspects, device 102, device 140, and/or device 160 may be configured to implement one or more operations and/or functionalities of a WLAN parameter-setting mechanism, which may be configured to provide a technical solution to support setting one or more WLAN parameters for a WLAN device, for example, based on WLAN parameter-setting information from a server, e.g., as described below.

In some demonstrative aspects, the WLAN parameter-setting mechanism may be configured to support providing the WLAN parameter-setting information from the server to AP STAs and/or non-AP STAs, for example, according to one or more protocols, and/or criteria, e.g., as described below.

In some demonstrative aspects, system 100 may include a parameter-setting server 180, which may be configured to provide WLAN parameter-setting information to one or more WLAN devices, e.g., device 102, device 140, and/or device 160, e.g., as described below.

In some demonstrative aspects, parameter-setting server 180 may be hosted as part of a wireless communication service.

In other aspects, parameter-setting server 180 may be implemented as a separate, e.g., dedicated, service, for example, as a separate cloud service, and/or as part of any other additional or alternative service or framework.

In some demonstrative aspects, parameter-setting server 180 may include, for example, a processor 171, a memory unit 174, and/or a storage unit 175. The parameter-setting server 180 may optionally include other suitable hardware components and/or software components. In some demonstrative aspects, some or all of the components of parameter-setting server 180 may be enclosed in a common housing or packaging, and may be interconnected or operably associated using one or more wired or wireless links. In other aspects, components of one or more of parameter-setting server 180 may be distributed among multiple or separate devices.

In some demonstrative aspects, processor 171 may include, for example, a CPU, a DSP, one or more processor cores, a single-core processor, a dual-core processor, a multiple-core processor, a microprocessor, a host processor, a controller, a plurality of processors or controllers, a chip, a microchip, one or more circuits, circuitry, a logic unit, an IC, an ASIC, or any other suitable multi-purpose or specific processor or controller. Processor 171 may execute instructions, for example, of an OS of parameter-setting server 180 and/or of one or more suitable applications.

In some demonstrative aspects, memory unit 174 includes, for example, a RAM, a ROM, a DRAM, an SD-RAM, a flash memory, a volatile memory, a non-volatile memory, a cache memory, a buffer, a short term memory unit, a long term memory unit, or other suitable memory units. Storage unit 175 may include, for example, a hard disk drive, a disk drive, an SSD, and/or other suitable removable or non-removable storage units. Memory unit 174 and/or storage unit 175, for example, may store data processed by parameter-setting server 180. Memory unit 174 and/or storage unit 175, for example, may store data processed by parameter-setting server 180.

In some demonstrative aspects, parameter-setting server 180 may include one or more communication interfaces 178 configured to communicate with one or more devices, e.g., device 102, device 140, and/or device 160, and/or any other additional or alternative element and/or device of system 100. For example, the one or more communication interfaces 178 may include one or more wireless communication interfaces, e.g., including one or more radios, to communicate over one or more wireless communication networks, and/or one or more wired communication interfaces to communicate over one or more wired networks.

In some demonstrative aspects, parameter-setting server 180 may include a controller 164. Controller 164 may be configured to perform and/or to trigger, cause, instruct and/or control parameter-setting server 180 to perform, one or more communications, to generate and/or communicate one or more messages and/or transmissions, and/or to perform one or more functionalities, operations and/or procedures between parameter-setting server 180, devices 102, 140, 160 and/or one or more other devices, e.g., as described below.

In some demonstrative aspects, controller 164 include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of controller 164. Additionally or alternatively, one or more functionalities of controller 164 may be implemented by logic, which may be executed by a machine and/or one or more processors, e.g., as described below.

In one example, controller 164 may include circuitry and/or logic, for example, one or more processors including circuitry and/or logic, to cause, trigger and/or control a server, e.g., parameter-setting server 180, to perform one or more operations, communications and/or functionalities, e.g., as described herein. In one example, controller 164 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, parameter-setting server 180 may include a message processor 168 configured to generate, process and/or access one or messages communicated by parameter-setting server 180.

In one example, message processor 168 may be configured to generate one or more messages to be transmitted by parameter-setting server 180, and/or message processor 168 may be configured to access and/or to process one or more messages received by parameter-setting server 180, e.g., as described below.

In one example, message processor 168 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 168 may be configured to perform any other additional or alternative functionality and/or may include any other additional or alternative components to generate and/or process a message to be transmitted.

In some demonstrative aspects, message processor 168 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processor 168. Additionally or alternatively, one or more functionalities of message processor 168 may be implemented by logic, which may be executed by a machine and/or one or more processors, e.g., as described below.

In some demonstrative aspects, at least part of the functionality of message processor 168 may be implemented as part of controller 164. In other aspects, the functionality of message processor 168 may be implemented as part of any other element of parameter-setting server 180.

In some demonstrative aspects, parameter-setting server 180 may be implemented as an entity, e.g., a cloud entity, which may be implemented in a cloud, for example, to provide information to devices 102, 140, 160 and/or one or more other devices, e.g., as described below.

In some demonstrative aspects, parameter-setting server 180 may be configured to provide one or more functionalities and/or operations of a centralized database, for example, to provide a feature parametrization, e.g., as a centralized feature parameterization entity and/or a feature control entity, e.g., as described below.

In some demonstrative aspects, parameter-setting server 180 may be configured to implement one or more operations and/or functionalities of a WLAN parameter-setting mechanism, which may be configured to maintain, manage, and/or distribute to devices of system 100, e.g., devices 102, 140 and/or 160, information corresponding to WLAN features, e.g., the latest features, which may be defined in accordance with one or more Specifications and/or protocols, for example, in accordance with the *IEEE 802.11 Standards,* and/or any other additional or alternative standards.

For example, parameter-setting server 180 may be configured to maintain, manage, and/or distribute to devices of system 100, e.g., devices 102, 140 and/or 160, settings of one or more parameters, for example, including the latest settings of parameters and/or ranges of parameters of the latest features that currently need to be applied and/or respected by one or more APs and/or non-AP STAs supporting these features, e.g., in accordance with the *IEEE 802.11 Standards,* and/or any other additional or alternative standards.

In some demonstrative aspects, parameter-setting server 180 may be configured to implement one or more operations and/or functionalities of a WLAN parameter-setting mechanism, which may be configured to support one or more rules on how data can be used, e.g., as described below.

In some demonstrative aspects, parameter-setting server 180 may be configured to implement one or more operations and/or functionalities of a WLAN parameter-setting mechanism, which may be configured to define one or more classes of data for privacy, e.g., as described below.

In some demonstrative aspects, parameter-setting server 180 may be configured to implement one or more operations and/or functionalities of a WLAN parameter-setting mechanism, which may be configured to utilize one or more Artificial Intelligence (AI) techniques, to utilize appropriate data for network optimization, e.g., as described below.

In some demonstrative aspects, device 102, device 140, and/or device 160 may be configured to implement one or more operations and/or functionalities of a WLAN parameter-setting mechanism, which may be configured to support a server-based setting of one or more WLAN parameters to be implemented by a WLAN STA, for example, a WLAN STA implemented by device 102, device 140, and/or device 160, for example, based on parameter information provided from parameter-setting server 180, e.g., as described below.

In some demonstrative aspects, controller 124 may be configured to control, trigger, cause, and/or instruct a WLAN AP STA implemented by device 102 to establish a connection with a parameter-setting server, for example, parameter-setting server 180, e.g., as described below.

In some demonstrative aspects, controller 124 may be configured to control, trigger, cause, and/or instruct the WLAN AP STA implemented by device 102 to establish the connection with the parameter-setting server as a secure connection, e.g., as described below.

In other aspects, the connection between the WLAN AP STA and the parameter-setting server may include any other type of connection.

In some demonstrative aspects, controller 124 may be configured to control, trigger, cause, and/or instruct the WLAN AP STA implemented by device 102 to process WLAN parameter-setting information from the parameter-setting server, for example, to identify a setting of one or more WLAN parameters to be implemented by the WLAN AP STA, e.g., as described below.

In some demonstrative aspects, controller 124 may be configured to control, trigger, cause, and/or instruct the WLAN AP STA implemented by device 102 to communicate one or more transmissions in a WLAN, for example, according to the setting of the one or more WLAN parameters, e.g., as described below.

In some demonstrative aspects, controller 124 may be configured to control, trigger, cause, and/or instruct the WLAN AP STA implemented by device 102 to transmit non-AP configuration information to at least one non-AP STA in the WLAN, for example, a non-AP STA implemented by device 140 and/or a non-AP STA implemented by device 160, e.g., as described below.

In some demonstrative aspects, the non-AP configuration information may include information to configure communications between the non-AP STA and the WLAN AP STA, for example, based on the setting of the one or more WLAN parameters from the parameter-setting server, e.g., as described below.

In some demonstrative aspects, the WLAN AP STA implemented by device 102 may be configured to implement one or more MAC mechanisms, for example, to communicate the one or more transmissions in the WLAN, e.g., as described below.

In some demonstrative aspects, controller 124 may be configured to control, trigger, cause, and/or instruct the WLAN AP STA implemented by device 102 to selectively enable or disable the one or more MAC mechanisms, for example, based on the setting of the one or more WLAN parameters, e.g., as described below.

In some demonstrative aspects, controller 124 may be configured to control, trigger, cause, and/or instruct the WLAN AP STA implemented by device 102 to identify the setting of the one or more WLAN parameters to include a first setting of the one or more WLAN parameters, which is different from a second setting of the one or more WLAN parameters, e.g., as described below.

In some demonstrative aspects, the second setting of the one or more WLAN parameters may include a default setting of the one or more WLAN parameters, for example, according to a WLAN communication standard, for example, in accordance with an *IEEE 802.11 Standard* and/or any other standard, e.g., as described below.

In some demonstrative aspects, the first setting of the one or more WLAN parameters may be less-restrictive from the second setting of the one or more WLAN parameters, e.g., as described below.

In some demonstrative aspects, controller 124 may be configured to control, trigger, cause, and/or instruct the WLAN AP STA implemented by device 102 to send to the parameter-setting server, e.g., to parameter-setting server 180, location information corresponding to a location of the WLAN AP STA, e.g., as described below.

In some demonstrative aspects, the WLAN parameter-setting information from the parameter-setting server may include location-based WLAN parameter-setting information to configure the setting of the one or more WLAN parameters, for example, based on the location of the WLAN AP STA, e.g., as described below.

In some demonstrative aspects, controller 124 may be configured to control, trigger, cause, and/or instruct the WLAN AP STA implemented by device 102 to configure a first setting of the one or more WLAN parameters to be implemented by the WLAN AP STA to communicate one or more first transmissions in the WLAN, for example, based on first WLAN parameter-setting information from the parameter-setting server, e.g., as described below.

In some demonstrative aspects, controller 124 may be configured to control, trigger, cause, and/or instruct the WLAN AP STA implemented by device 102 to configure a second setting of the one or more WLAN parameters to be implemented by the WLAN AP STA to communicate one or more second transmissions in the WLAN, for example, based on second WLAN parameter-setting information from the parameter-setting server, e.g., as described below.

In some demonstrative aspects, the second setting of the one or more WLAN parameters may be different from the first setting of the one or more WLAN parameters, e.g., as described below.

In some demonstrative aspects, controller 124 may be configured to control, trigger, cause, and/or instruct the WLAN AP STA implemented by device 102 to retrieve the WLAN parameter-setting information from the parameter-setting server, e.g., parameter-setting server 180, for example, according to a predefined periodicity, e.g., as described below.

In some demonstrative aspects, a periodicity to be used by a WLAN STA to retrieve WLAN parameter-setting information from a parameter-setting server may be based, for example, on whether the WLAN STA is an AP or a non-AP STA, e.g., as described below.

For example, controller 124 may be configured to control, trigger, cause, and/or instruct the WLAN AP STA implemented by device 102 to retrieve the WLAN parameter-setting information from the parameter-setting server, e.g., parameter-setting server 180, for example, according to a predefined periodicity which may be defined for WLAN APs, e.g., as described below.

In other aspects, the predefined periodicity may be based on any other additional or alternative criteria.

In some demonstrative aspects, controller 154 may be configured to control, trigger, cause, and/or instruct a WLAN non-AP STA implemented by device 140 to establish a connection with a parameter-setting server, for example, parameter-setting server 180, e.g., as described below.

In some demonstrative aspects, controller 154 may be configured to control, trigger, cause, and/or instruct the WLAN non-AP STA implemented by device 140 to establish the connection with the parameter-setting server as a secure connection, e.g., as described below.

In other aspects, the connection between the WLAN non-AP STA and the parameter-setting server may include any other type of connection.

In some demonstrative aspects, controller 154 may be configured to control, trigger, cause, and/or instruct the WLAN non-AP STA implemented by device 140 to process WLAN parameter-setting information from the parameter-setting server, for example, to identify a setting of one or more WLAN parameters to be implemented by the WLAN non-AP STA, e.g., as described below.

In some demonstrative aspects, controller 154 may be configured to control, trigger, cause, and/or instruct the WLAN non-AP STA implemented by device 140 to communicate one or more transmissions in a WLAN, for example, according to the setting of the one or more WLAN parameters, e.g., as described below.

In some demonstrative aspects, controller 154 may be configured to control, trigger, cause, and/or instruct the WLAN non-AP STA implemented by device 140 to configure communications between the WLAN non-AP STA and an AP of the WLAN, e.g., an AP implemented by device 102, for example, based on the setting of the one or more WLAN parameters, e.g., as described below.

In some demonstrative aspects, the WLAN non-AP STA implemented by device 140 may be configured to implement one or more MAC mechanisms, for example, to communicate the one or more transmissions in the WLAN, e.g., as described below.

In some demonstrative aspects, controller 154 may be configured to control, trigger, cause, and/or instruct the WLAN non-AP STA implemented by device 140 to selectively enable or disable the one or more MAC mechanisms, for example, based on the setting of the one or more WLAN parameters, e.g., as described below.

In some demonstrative aspects, controller 154 may be configured to control, trigger, cause, and/or instruct the WLAN non-AP STA implemented by device 140 to identify the setting of the one or more WLAN parameters to include a first setting of the one or more WLAN parameters, which is different from a second setting of the one or more WLAN parameters, e.g., as described below.

In some demonstrative aspects, the second setting of the one or more WLAN parameters may include a default setting of the one or more WLAN parameters, for example, according to a WLAN communication standard, for example, in accordance with an *IEEE 802.11 Standard* and/or any other standard, e.g., as described below.

In some demonstrative aspects, the first setting of the one or more WLAN parameters may be less-restrictive from the second setting of the one or more WLAN parameters, e.g., as described below.

In some demonstrative aspects, controller 154 may be configured to control, trigger, cause, and/or instruct the WLAN non-AP STA implemented by device 140 to send to the parameter-setting server, e.g., to parameter-setting server 180, location information corresponding to a location of the WLAN non-AP STA, e.g., as described below.

In some demonstrative aspects, the WLAN parameter-setting information from the parameter-setting server may include location-based WLAN parameter-setting information to configure the setting of the one or more WLAN parameters, for example, based on the location of the WLAN non-AP STA, e.g., as described below.

In some demonstrative aspects, controller 154 may be configured to control, trigger, cause, and/or instruct the WLAN non-AP STA implemented by device 140 to configure a first setting of the one or more WLAN parameters to be implemented by the WLAN non-AP STA to communicate one or more first transmissions in the WLAN, for example, based on first WLAN parameter-setting information from the parameter-setting server, e.g., as described below.

In some demonstrative aspects, controller 154 may be configured to control, trigger, cause, and/or instruct the WLAN non-AP STA implemented by device 140 to configure a second setting of the one or more WLAN parameters to be implemented by the WLAN non-AP STA to communicate one or more second transmissions in the WLAN, for example, based on second WLAN parameter-setting information from the parameter-setting server, e.g., as described below.

In some demonstrative aspects, the second setting of the one or more WLAN parameters may be different from the first setting of the one or more WLAN parameters, e.g., as described below.

In some demonstrative aspects, controller 154 may be configured to control, trigger, cause, and/or instruct the WLAN non-AP STA implemented by device 140 to retrieve the WLAN parameter-setting information from the parameter-setting server 180, for example, according to a predefined periodicity, e.g., as described below.

In some demonstrative aspects, a periodicity to be used by a WLAN STA to retrieve WLAN parameter-setting information from a parameter-setting server may be based, for example, on whether the WLAN STA is an AP or a non-AP STA, e.g., as described below.

For example, controller 154 may be configured to control, trigger, cause, and/or instruct the WLAN non-AP STA implemented by device 140 to retrieve the WLAN parameter-setting information from the parameter-setting server, e.g., parameter-setting server 180, for example, according to a predefined periodicity which may be defined for WLAN non-AP STAs, e.g., as described below.

In other aspects, the predefined periodicity may be based on any other additional or alternative criteria.

In some demonstrative aspects, controller 164 may be configured to control, trigger, cause, and/or instruct parameter-setting server 180 to establish a connection with a WLAN STA, for example, a WLAN AP STA implemented by device 102, a WLAN non-AP STA implemented by device 140, and/or a WLAN non-AP STA implemented by device 160, e.g., as described below.

In some demonstrative aspects, controller 164 may be configured to control, trigger, cause, and/or instruct the parameter-setting server 180 to establish the connection with the WLAN STA as a secure connection, e.g., as described below.

In other aspects, the connection between the parameter-setting server 180 and the WLAN STA may include any other type of connection.

In some demonstrative aspects, controller 164 may be configured to control, trigger, cause, and/or instruct the parameter-setting server 180 to send WLAN parameter-setting information to the WLAN STA, for example, via the connection with the WLAN STA, e.g., as described below.

In some demonstrative aspects, the WLAN parameter-setting information may be configured to indicate a setting of one or more WLAN parameters to be implemented by the WLAN STA for communication in a WLAN, e.g., as described below.

In some demonstrative aspects, the WLAN parameter-setting information may be configured to selectively enable or disable one or more MAC mechanisms to be implemented by the WLAN STA to communicate in the WLAN, e.g., as described below.

In some demonstrative aspects, the WLAN STA may include an AP, e.g., a WLAN AP STA implemented by device 102.

In some demonstrative aspects, the WLAN STA may include a non-AP STA, e.g., a WLAN non-AP STA implemented by device 140.

In some demonstrative aspects, controller 164 may be configured to control, trigger, cause, and/or instruct the parameter-setting server 180 to configure the WLAN parameter-setting information, for example, to indicate a first setting of the one or more WLAN parameters, e.g., as described below.

In some demonstrative aspects, the first setting of the one or more WLAN parameters may be different from a second setting of the one or more WLAN parameters, e.g., as described below.

In some demonstrative aspects, the second setting of the one or more WLAN parameters may include a default setting of the one or more WLAN parameters, for example, according to a WLAN communication standard, e.g., as described below.

In some demonstrative aspects, the first setting of the one or more WLAN parameters may be less-restrictive from the second setting of the one or more WLAN parameters, e.g., as described below.

In some demonstrative aspects, controller 164 may be configured to control, trigger, cause, and/or instruct the parameter-setting server 180 to send to a first WLAN STA first WLAN parameter-setting information, for example, to indicate a first setting of the one or more WLAN parameters to be implemented by the first WLAN STA, e.g., as described below.

In some demonstrative aspects, controller 164 may be configured to control, trigger, cause, and/or instruct the parameter-setting server 180 to send to a second WLAN STA second WLAN parameter-setting information, for example, to indicate a second setting of the one or more WLAN parameters to be implemented by the second WLAN STA, e.g., as described below.

In some demonstrative aspects, the second setting of the one or more WLAN parameters may be different from the first setting of the one or more WLAN parameters, e.g., as described below.

In some demonstrative aspects, controller 164 may be configured to control, trigger, cause, and/or instruct the parameter-setting server 180 to determine the first WLAN parameter-setting information, for example, based on one or more WLAN capabilities of the first WLAN STA, e.g., as described below.

In some demonstrative aspects, controller 164 may be configured to control, trigger, cause, and/or instruct the parameter-setting server 180 to determine the second WLAN parameter-setting information, for example, based on one or more WLAN capabilities of the second WLAN STA, e.g., as described below.

In some demonstrative aspects, the first WLAN STA may belong to a first WLAN, and the second WLAN STA may belong to a second WLAN, e.g., as described below.

In other aspects, the first WLAN STA and the second WLAN STA may belong to the same WLAN.

In some demonstrative aspects, the first WLAN STA may be located at a first location, e.g., as described below.

In some demonstrative aspects, the second WLAN STA may be located at a second location, for example, different from the first location, e.g., as described below.

In other aspects, the first WLAN STA and the second WLAN STA may located at substantially the same location, or in close proximity to one another.

In some demonstrative aspects, the first WLAN STA may include an AP, e.g., a WLAN AP STA implemented by device 102.

In some demonstrative aspects, the second WLAN STA may include a non-AP STA, e.g., a WLAN non-AP STA implemented by device 140.

In other aspects, the first WLAN STA may include a first non-AP STA, and the second WLAN STA may include a second non-AP STA.

In other aspects, the first WLAN STA may include a first AP STA, and the second WLAN STA may include a second AP STA.

In some demonstrative aspects, controller 164 may be configured to control, trigger, cause, and/or instruct the parameter-setting server 180 to process location information corresponding to a location of the WLAN STA, e.g., as described below.

In some demonstrative aspects, controller 164 may be configured to control, trigger, cause, and/or instruct the parameter-setting server 180 to configure the WLAN parameter-setting information for the WLAN STA to include location-based WLAN parameter-setting information to configure the setting of the one or more WLAN parameters for the WLAN STA, for example, based on the location of the WLAN STA, e.g., as described below.

In some demonstrative aspects, the setting of the one or more WLAN parameters indicated by the WLAN parameter-setting information provided from a parameter-setting server, e.g., the parameter-setting server 180, to a WLAN STA, e.g., the WLAN STA implemented by device 102, the WLAN STA implemented by device 140, and/or WLAN STA implemented by device 160, may include a setting of one or more WLAN MAC parameters, e.g., as described below.

In some demonstrative aspects, the setting of the one or more WLAN parameters may include a setting of one or more density-affected parameters, which are affected by a WLAN density, e.g., as described below.

In some demonstrative aspects, the setting of the one or more WLAN parameters may include a setting of one or more interference-affected parameters, which are affected by WLAN interference, e.g., as described below.

In some demonstrative aspects, the setting of the one or more WLAN parameters may include a setting of one or more WLAN channel access parameters, for example, to configure a channel access to be implemented by the WLAN STA to communicate the one or more transmissions in the WLAN, e.g., as described below.

In some demonstrative aspects, the one or more WLAN channel access parameters may include one or more contention-based channel access parameters, e.g., as described below.

In some demonstrative aspects, the one or more WLAN channel access parameters may include one or more Enhanced Distributed Coordination Function (EDCF) parameters, e.g., as described below.

In other aspects, the one or more WLAN channel access parameters may include any other additional or alternative parameters, which may configure a channel access to be implemented by the WLAN STA.

In other aspects, the setting of the one or more WLAN parameters may include any other additional or alternative settings of one or more additional or alternative WLAN parameters.

In some demonstrative aspects, device 102, device 140, and/or device 160 may be configured to implement one or more operations and/or functionalities of a WLAN parameter-setting mechanism, which may be configured to support setting of one or more WLAN parameters to be implemented by a WLAN STA, for example, a WLAN STA implemented by device 102, device 140, and/or device 160, e.g., as described below.

In some demonstrative aspects, device 102, device 140, and/or device 160 may be configured to implement one or more operations and/or functionalities of a WLAN parameter-setting mechanism, which may be configured to support server-based provisioning of the WLAN parameter-setting information including the one or more WLAN parameters from a parameter-setting server, for example, parameter-setting server 180, e.g., as described below.

In some demonstrative aspects, device 102, device 140, and/or device 160 may be configured to implement one or more operations and/or functionalities of a WLAN parameter-setting mechanism, which may be configured to support reception of WLAN parameter-setting information including the one or more WLAN parameters from parameter-setting server 180, e.g., as described below.

For example, it may be defined that an AP, e.g., an *IEEE 802.11* AP, is to securely connect to a centralized entity, e.g., an entity implemented by parameter-setting server 180, in a regular manner, for example, in order to update one or more features and/or parameters for these features that it is allowed to use.

For example, it may be defined that a non-AP STA, e.g., an *IEEE 802.11* non-AP STA, is to securely connect to a centralized entity, e.g., an entity implemented by parameter-setting server 180, in a regular manner, for example, in order to update one or more features and/or parameters for these features that it is allowed to use.

In some demonstrative aspects, parameter-setting server 180 may be configured to implement one or more operations and/or functionalities of a WLAN parameter-setting mechanism, which may be configured to support parametrization of one or more features, e.g., features defined in accordance with an *IEEE 802.11 Standard.*

In some demonstrative aspects, the WLAN parameter-setting mechanism may be configured to support setting of one or more features to be used in the field by APs and/or non-AP STAs, for example, only if allowed by a centralized entity, e.g., an entity implemented by parameter-setting server 180, and/or that would be parametrized by the centralized entity.

In one example, it may be defined that APs only may, e.g., shall, connect to the centralized entity in a regular manner, e.g., as may be defined in accordance with the *IEEE 802.11 Standard,* for example, on a day basis, a month basis, a year basis, or any other periodicity defined for APs.

In another example, it may be defined that APs and/or non-AP STAs may, e.g., shall, connect to the centralized entity in a regular manner, e.g., as ay be defined in accordance with the *IEEE 802.11 Standard,* for example, on a day basis, a month basis, a year basis, or any other periodicity defined for APs and/or any other periodicity defined for non-AP STAs.

In some demonstrative aspects, it may be defined that one or more WLAN parameters may be configured, set and/or defined for an AP and/or a non-AP STA, for example, based on the location of the AP and/or the non-AP STA.

In some demonstrative aspects, it may be defined that one or more WLAN features and/or parameters may be selectively enabled or disabled for an AP and/or a non-AP STA, for example, based on the location of the AP and/or the non-AP STA.

For example, it may be defined that a WLAN STA, e.g., the AP and/or the non-AP STA, is to provide to the centralized entity, e.g., an entity implemented by parameter-setting server 180, its location, for example, so that information, e.g., WLAN parameter-setting information, provided by the centralized entity can be specifically tailored for that location of the WLAN STA.

For example, it may be defined that a parametrization, which is configured per location is to be applied with respect to the APs, e.g., fixed or mobile, or even only to fixed APs. For example, it may be defined that the APs are to propagate the WLAN parameter-setting information corresponding to their location to their non-AP STAs, for example, using *IEEE 802.11* frames.

In some demonstrative aspects, the WLAN parameter-setting mechanism may be configured to support setting one or more features and/or a range of parameters, e.g., in accordance with the *IEEE 802.11 Standard,* that can only be enabled by WLAN STAs, e.g., non-AP STAs and/or APs, in the field, for example, if the non-AP STAs and/or APs support a connection to a centralized database, e.g., database implemented by parameter-setting server 180, and respect rules for getting updates from the centralized databased, e.g., in a regular manner, for example, based on a predefined periodicity.

In some demonstrative aspects, one or more measurements, for example, throughput, latency, outages, transition delays, coverage, collisions, and/or any other additional or alternative measurement, may be performed on the field, for example, in different types of environments, for example, once a feature is released and deployed with a certain set of parameters.

For example, the one or more measurements may be utilized to converge over time on a right set of parameters to use or not use, and/or to feed what values are advertised by the centralized entity.

For example, it may be defined that a wider range of parameters, e.g., EDCA parameters of an EDCA mechanism, is to be allowed to be used, e.g., in accordance with the *IEEE 802.11 Standard,* for example, in order to improve tail latency and/or any other additional or alternative parameters.

For example, the centralized entity may be utilized to ensure convergence towards the right set of parameters, e.g., a set of EDCA parameters, that may provide one or more performance gains, for example, while ensuring that there are no issues on the field because of too many collisions and/or failures of the EDCA mechanism.

In some demonstrative aspects, the WLAN parameter-setting mechanism may be configured to support configuration, setting, sharing, and/or optimization of the WLAN parameters in an implementation specific manner.

In some demonstrative aspects, the WLAN parameter-setting mechanism may be configured to support using one or more AI techniques, which may be configured, for example, to provide a technical solution for optimization of a network, e.g., per STA, as a group of STAs, and/or even as a group of APs.

For example, one or more AI techniques may be implemented to provide a technical solution to support the optimization of the network with large sets of data by time, date, location and/or any other means.

In some demonstrative aspects, the WLAN parameter-setting mechanism may be configured to support one or more data classes, which may include a private data class, a limited use data class, and/or any other additional or alternative type of data class.

For example, it may be defined that data that is private and/or data that may, e.g., should, only have limited use, is not to be shared outside a network or an authorized agent. For example, it may be defined that data that is private and/or data that should only have limited use, is to be even limited to only be applied to a STA/AP exchange.

In some demonstrative aspects, the WLAN parameter-setting mechanism may be configured to support one or more classes of parameters that would be exchanged, used, and/or shared with APs and/or non-AP STAs.

For example, the one or more classes of parameters may include a private parameter class, where data is to be used, e.g., only to be used, between an AP and a non-AP STA or other very limited devices, e.g., which are pre-agreed.

For example, the one or more classes of parameters may include a limited use sharing parameter class, for example, to be used, e.g., only to be used, during a certain connection, and/or between certain devices, and/or for a prearranged time.

For example, the one or more classes of parameters may include a public data parameter class, where data may, e.g., can, be shared, e.g., without limits on duration and/or devices.

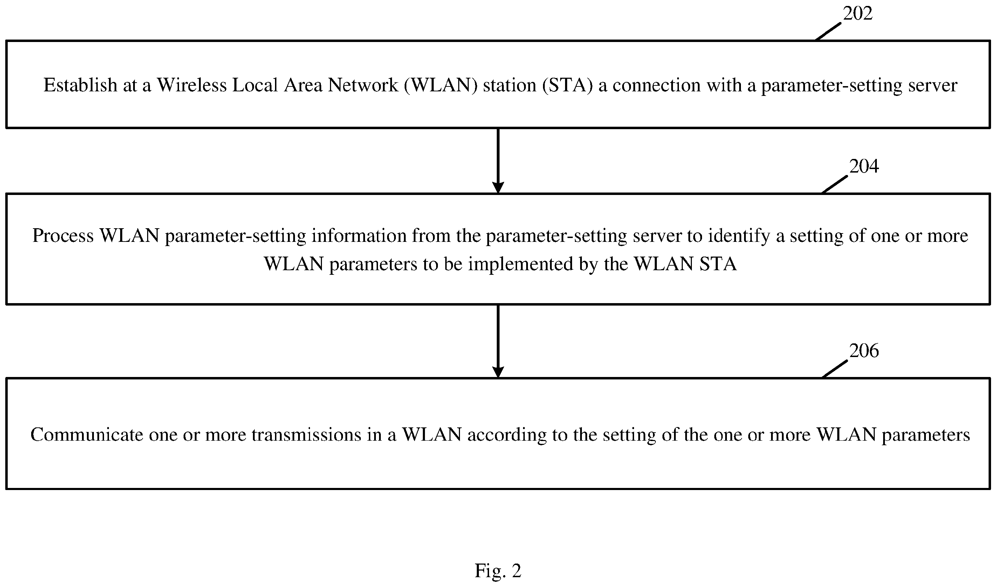

Reference is made to Fig. 2, which schematically illustrates a method of server-based setting of WLAN parameters, in accordance with some demonstrative aspects. For example, one or more of the operations of the method of Fig. 2 may be performed by one or more elements of a system, e.g., system 100 (Fig. 1), for example, one or more wireless devices, e.g., device 102 (Fig. 1), device 140 (Fig. 1), and/or device 160 (Fig. 1), a server, e.g., parameter-setting server 180 (Fig. 1), a controller, e.g., controller 124 (Fig. 1), controller 154 (Fig. 1) and/or controller 164 (Fig. 1), a radio, e.g., radio 114 (Fig. 1) and/or radio 144 (Fig. 1), and/or a message processor, e.g., message processor 128 (Fig. 1), message processor 158 (Fig. 1) and/or message processor 168 (Fig. 1).

As indicated at block 202, the method may include establishing, at a WLAN STA, a connection with a parameter-setting server. In one example, controller 154 (Fig. 1) may be configured to cause, trigger, and/or control a WLAN non-AP STA implemented by device 140 (Fig. 1) to establish a connection with a parameter-setting server, e.g., as described above. In another example, controller 124 (Fig. 1) may be configured to cause, trigger, and/or control a WLAN AP STA implemented by device 102 (Fig. 1) to establish a connection with a parameter-setting server, e.g., as described above.

As indicated at block 204, the method may include processing WLAN parameter-setting information from the parameter-setting server to identify a setting of one or more WLAN parameters to be implemented by the WLAN STA. In one example, controller 154 (Fig. 1) may be configured to cause, trigger, and/or control the WLAN non-AP STA implemented by device 140 (Fig. 1) to process WLAN parameter-setting information from the parameter-setting server to identify a setting of one or more WLAN parameters to be implemented by the WLAN non-AP STA, e.g., as described above. In another example, controller 124 (Fig. 1) may be configured to cause, trigger, and/or control the WLAN AP STA implemented by device 102 (Fig. 1) to process WLAN parameter-setting information from the parameter-setting server to identify a setting of one or more WLAN parameters to be implemented by the WLAN AP STA, e.g., as described above.

As indicated at block 206, the method may include communicating one or more transmissions in a WLAN, for example, according to the setting of the one or more WLAN parameters. In one example, controller 154 (Fig. 1) may be configured to cause, trigger, and/or control the WLAN non-AP STA implemented by device 140 (Fig. 1) to communicate one or more transmissions in a WLAN, for example, according to the setting of the one or more WLAN parameters, e.g., as described above. In another example, controller 124 (Fig. 1) may be configured to cause, trigger, and/or control the WLAN AP STA implemented by device 102 (Fig. 1) to communicate one or more transmissions in a WLAN, for example, according to the setting of the one or more WLAN parameters, e.g., as described above.

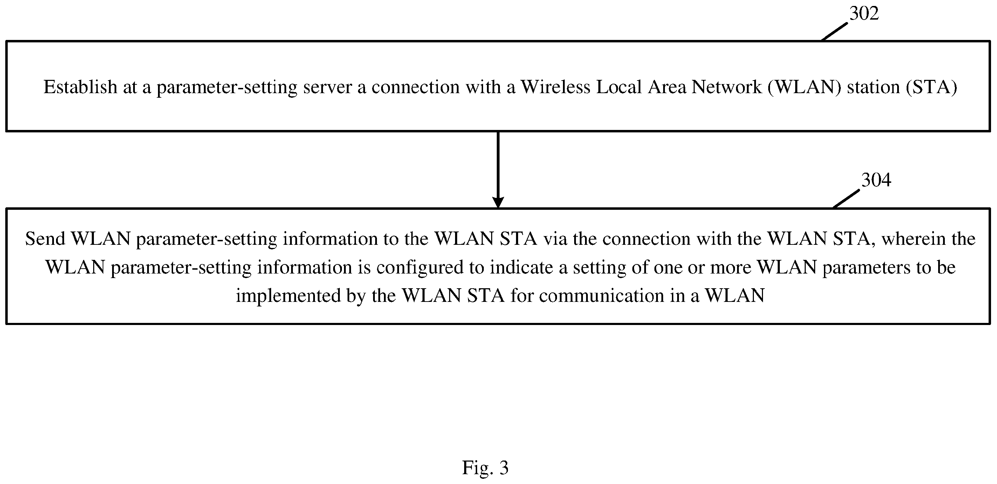

Reference is made to Fig. 3, which schematically illustrates a method of server-based setting of WLAN parameters, in accordance with some demonstrative aspects. For example, one or more of the operations of the method of Fig. 3 may be performed by one or more elements of a system, e.g., system 100 (Fig. 1), for example, one or more wireless devices, e.g., device 102 (Fig. 1), device 140 (Fig. 1), and/or device 160 (Fig. 1), a server, e.g., parameter-setting server 180 (Fig. 1), a controller, e.g., controller 124 (Fig. 1), controller 154 (Fig. 1) and/or controller 164 (Fig. 1), a radio, e.g., radio 114 (Fig. 1) and/or radio 144 (Fig. 1), and/or a message processor, e.g., message processor 128 (Fig. 1), message processor 158 (Fig. 1) and/or message processor 168 (Fig. 1).

As indicated at block 302, the method may include establishing, at a parameter-setting server, a connection with a WLAN STA. For example, controller 164 (Fig. 1) may be configured to cause, trigger, and/or control a parameter-setting server implemented by device 180 (Fig. 1) to establish a connection with a WLAN STA, e.g., as described above.

As indicated at block 304, the method may include sending WLAN parameter-setting information to the WLAN STA, for example, via the connection with the WLAN STA. For example, the WLAN parameter-setting information may be configured to indicate a setting of one or more WLAN parameters to be implemented by the WLAN STA for communication in a WLAN. For example, controller 164 (Fig. 1) may be configured to cause, trigger, and/or control the parameter-setting server implemented by device 180 (Fig. 1) to send WLAN parameter-setting information to the WLAN STA via the connection with the WLAN STA, wherein the WLAN parameter-setting information is configured to indicate a setting of one or more WLAN parameters to be implemented by the WLAN STA for communication in a WLAN, e.g., as described above.

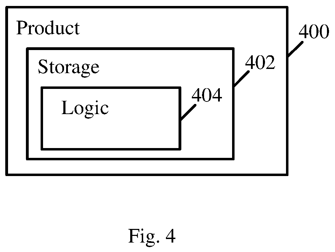

Reference is made to Fig. 4, which schematically illustrates a product of manufacture 400, in accordance with some demonstrative aspects. Product 400 may include one or more tangible computer-readable ("machine-readable") non-transitory storage media 402, which may include computer-executable instructions, e.g., implemented by logic 404, operable to, when executed by at least one computer processor, enable the at least one computer processor to implement one or more operations at device 102 (Fig. 1), device 140 (Fig. 1), device 160 (Fig. 1), parameter-setting server 180 (Fig. 1), controller 124 (Fig. 1), controller 154 (Fig. 1), controller 164 (Fig. 1), message processor 128 (Fig. 1), message processor 158 (Fig. 1), message processor 168 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), parameter-setting server 180 (Fig. 1), controller 124 (Fig. 1), controller 154 (Fig. 1), controller 164 (Fig. 1), message processor 128 (Fig. 1), message processor 158 (Fig. 1), message processor 168 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, and/or 3, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 400 and/or machine readable storage media 402 may include one or more types of computer-readable storage media capable of storing data, including volatile memory, non-volatile memory, removable or non-removable memory, erasable or non-erasable memory, writeable or re-writeable memory, and the like. For example, machine readable storage media 402 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide- silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 404 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 404 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a Wireless Local Area Network (WLAN) station (STA) to establish a connection with a parameter-setting server; process WLAN parameter-setting information from the parameter-setting server to identify a setting of one or more WLAN parameters to be implemented by the WLAN STA; and communicate one or more transmissions in a WLAN according to the setting of the one or more WLAN parameters.

Example 2 includes the subject matter of Example 1, and optionally, wherein the apparatus is configured to cause the WLAN STA to identify the setting of the one or more WLAN parameters comprising a first setting of the one or more WLAN parameters, which is different from a second setting of the one or more WLAN parameters, wherein the second setting of the one or more WLAN parameters comprises a default setting of the one or more WLAN parameters according to a WLAN communication standard.

Example 3 includes the subject matter of Example 2, and optionally, wherein the first setting of the one or more WLAN parameters is less-restrictive from the second setting of the one or more WLAN parameters.

Example 4 includes the subject matter of any one of Examples 1-3, and optionally, wherein the setting of the one or more WLAN parameters comprises a setting of one or more WLAN Media Access Control (MAC) parameters.

Example 5 includes the subject matter of any one of Examples 1-4, and optionally, wherein the setting of the one or more WLAN parameters comprises a setting of one or more density-affected parameters, which are affected by a WLAN density.

Example 6 includes the subject matter of any one of Examples 1-5, and optionally, wherein the setting of the one or more WLAN parameters comprises a setting of one or more interference-affected parameters, which are affected by WLAN interference.

Example 7 includes the subject matter of any one of Examples 1-6, and optionally, wherein the setting of the one or more WLAN parameters comprises a setting of one or more WLAN channel access parameters to configure a channel access to be implemented by the WLAN STA to communicate the one or more transmissions in the WLAN.

Example 8 includes the subject matter of Example 7, and optionally, wherein the one or more WLAN channel access parameters comprises one or more contention-based channel access parameters.

Example 9 includes the subject matter of Example 7 or 8, and optionally, wherein the one or more WLAN channel access parameters comprises one or more Enhanced Distributed Coordination Function (EDCF) parameters.

Example 10 includes the subject matter of any one of Examples 1-9, and optionally, wherein the apparatus is configured to cause the WLAN STA to selectively enable or disable, based on the setting of the one or more WLAN parameters, one or more Media Access Control (MAC) mechanisms to be implemented by the WLAN STA to communicate the one or more transmissions in the WLAN.

Example 11 includes the subject matter of any one of Examples 1-10, and optionally, wherein the apparatus is configured to cause the WLAN STA to configure a first setting of the one or more WLAN parameters to be implemented by the WLAN STA to communicate one or more first transmissions in the WLAN based on first WLAN parameter-setting information from the parameter-setting server, and to configure a second setting of the one or more WLAN parameters to be implemented by the WLAN STA to communicate one or more second transmissions in the WLAN based on second WLAN parameter-setting information from the parameter-setting server, wherein the second setting of the one or more WLAN parameters is different from the first setting of the one or more WLAN parameters.

Example 12 includes the subject matter of any one of Examples 1-11, and optionally, wherein the apparatus is configured to cause the WLAN STA to send to the parameter-setting server location information corresponding to a location of the WLAN STA, wherein the WLAN parameter-setting information from the parameter-setting server comprises location-based WLAN parameter-setting information to configure the setting of the one or more WLAN parameters based on the location of the WLAN STA.

Example 13 includes the subject matter of any one of Examples 1-12, and optionally, wherein the WLAN STA comprises an Access Point (AP).

Example 14 includes the subject matter of Example 13, and optionally, wherein the apparatus is configured to cause the AP to transmit non-AP configuration information to at least one non-AP STA in the WLAN, the non-AP configuration information to configure communications between the non-AP STA and the AP based on the setting of the one or more WLAN parameters.

Example 15 includes the subject matter of any one of Examples 1-12, and optionally, wherein the WLAN STA comprises a non Access Point (AP) (non-AP) STA.

Example 16 includes the subject matter of Example 15, and optionally, wherein the apparatus is configured to cause the non-AP STA to configure communications between the non-AP STA and an AP of the WLAN based on the setting of the one or more WLAN parameters.

Example 17 includes the subject matter of any one of Examples 1-16, and optionally, wherein the apparatus is configured to cause the WLAN STA to retrieve the WLAN parameter-setting information from the parameter-setting server according to a predefined periodicity.

Example 18 includes the subject matter of Example 17, and optionally, wherein the predefined periodicity is based on whether the WLAN STA is an Access Point (AP) or a non-AP STA.

Example 19 includes the subject matter of any one of Examples 1-18, and optionally, wherein the apparatus is configured to cause the WLAN STA to establish the connection with the parameter-setting server as a secure connection.

Example 20 includes the subject matter of any one of Examples 1-19, and optionally, comprising a radio to communicate the one or more transmissions in the WLAN.

Example 21 includes the subject matter of Example 20, and optionally, comprising one or more antennas connected to the radio, and a processor to execute instructions of an operating system.

Example 22 includes an apparatus comprising logic and circuitry configured to cause a parameter-setting server to establish a connection with a Wireless Local Area Network (WLAN) station (STA); and send WLAN parameter-setting information to the WLAN STA via the connection with the WLAN STA, wherein the WLAN parameter-setting information is configured to indicate a setting of one or more WLAN parameters to be implemented by the WLAN STA for communication in a WLAN.

Example 23 includes the subject matter of Example 22, and optionally, wherein the apparatus is configured to cause the parameter-setting server to configure the WLAN parameter-setting information to indicate a first setting of the one or more WLAN parameters, which is different from a second setting of the one or more WLAN parameters, wherein the second setting of the one or more WLAN parameters comprises a default setting of the one or more WLAN parameters according to a WLAN communication standard.

Example 24 includes the subject matter of Example 23, and optionally, wherein the first setting of the one or more WLAN parameters is less-restrictive from the second setting of the one or more WLAN parameters.

Example 25 includes the subject matter of any one of Examples 22-24, and optionally, wherein the setting of the one or more WLAN parameters comprises a setting of one or more WLAN Media Access Control (MAC) parameters.

Example 26 includes the subject matter of any one of Examples 22-25, and optionally, wherein the setting of the one or more WLAN parameters comprises a setting of one or more density-affected parameters, which are affected by a WLAN density.

Example 27 includes the subject matter of any one of Examples 22-26, and optionally, wherein the setting of the one or more WLAN parameters comprises a setting of one or more interference-affected parameters, which are affected by WLAN interference.

Example 28 includes the subject matter of any one of Examples 22-27, and optionally, wherein the setting of the one or more WLAN parameters comprises a setting of one or more WLAN channel access parameters to configure a channel access to be implemented by the WLAN STA to communicate in the WLAN.

Example 29 includes the subject matter of Example 28, and optionally, wherein the one or more WLAN channel access parameters comprises one or more contention-based channel access parameters.

Example 30 includes the subject matter of Example 28 or 29, and optionally, wherein the one or more WLAN channel access parameters comprises one or more Enhanced Distributed Coordination Function (EDCF) parameters.

Example 31 includes the subject matter of any one of Examples 22-30, and optionally, wherein the WLAN parameter-setting information is configured to selectively enable or disable one or more Media Access Control (MAC) mechanisms to be implemented by the WLAN STA to communicate in the WLAN.

Example 32 includes the subject matter of any one of Examples 22-31, and optionally, wherein the apparatus is configured to cause the parameter-setting server to send to a first WLAN STA first WLAN parameter-setting information to indicate a first setting of the one or more WLAN parameters to be implemented by the first WLAN STA, and to send to a second WLAN STA second WLAN parameter-setting information to indicate a second setting of the one or more WLAN parameters to be implemented by the second WLAN STA, wherein the second setting of the one or more WLAN parameters is different from the first setting of the one or more WLAN parameters.

Example 33 includes the subject matter of Example 32, and optionally, wherein the first WLAN STA belongs to a first WLAN, and the second WLAN STA belongs to a second WLAN.

Example 34 includes the subject matter of Example 32 or 33, and optionally, wherein the first WLAN STA is at a first location, and the second WLAN STA is at a second location different from the first location.

Example 35 includes the subject matter of any one of Examples 32-34, and optionally, wherein the apparatus is configured to cause the parameter-setting server to determine the first WLAN parameter-setting information based on one or more WLAN capabilities of the first WLAN STA, and to determine the second WLAN parameter-setting information based on one or more WLAN capabilities of the second WLAN STA.

Example 36 includes the subject matter of any one of Examples 32-35, and optionally, wherein the first WLAN STA is an Access Point, and the second WLAN STA is a non-AP STA.

Example 37 includes the subject matter of any one of Examples 22-36, and optionally, wherein the apparatus is configured to cause the parameter-setting server to process location information corresponding to a location of the WLAN STA, and to configure the WLAN parameter-setting information to comprise location-based WLAN parameter-setting information to configure the setting of the one or more WLAN parameters based on the location of the WLAN STA.

Example 38 includes the subject matter of any one of Examples 22-37, and optionally, wherein the WLAN STA comprises an Access Point (AP).

Example 39 includes the subject matter of any one of Examples 22-37, and optionally, wherein the WLAN STA comprises a non Access Point (AP) (non-AP) STA.

Example 40 includes the subject matter of any one of Examples 22-39, and optionally, wherein the apparatus is configured to parameter-setting server to establish the connection with the WLAN STA as a secure connection.

Example 41 includes the subject matter of any one of Examples 22-40, and optionally, comprising a communication interface to send the WLAN parameter-setting information to the WLAN STA.

Example 42 includes a server comprising the apparatus of any of Examples 22-41.

Example 43 includes a wireless communication device comprising the apparatus of any of Examples 1-21.

Example 44 includes a mobile device comprising the apparatus of any of Examples 1-21.

Example 45 includes a system comprising the apparatus of any of Examples 1-41.

Example 46 includes an apparatus comprising means for executing any of the described operations of any of Examples 1-41.

Example 47 includes a product comprising one or more tangible computer-readable non-transitory storage media comprising instructions operable to, when executed by at least one processor, enable the at least one processor to cause any of the described operations of any of Examples 1-41.

Example 48 includes an apparatus comprising: a memory interface; and processing circuitry configured to: perform any of the described operations of any of Examples 1-41.

Example 49 includes a method comprising any of the described operations of any of Examples 1-41.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a Wireless Local Area Network (WLAN) station (STA), the method comprising:
establishing a connection with a parameter-setting server;
processing WLAN parameter-setting information from the parameter-setting server to identify a setting of one or more WLAN parameters to be implemented by the WLAN STA; and
communicating one or more transmissions in a WLAN according to the setting of the one or more WLAN parameters.

2. The method of claim 1 comprising identifying the setting of the one or more WLAN parameters comprising a first setting of the one or more WLAN parameters, which is different from a second setting of the one or more WLAN parameters, wherein the second setting of the one or more WLAN parameters comprises a default setting of the one or more WLAN parameters according to a WLAN communication standard.

3. The method of claim 2, wherein the first setting of the one or more WLAN parameters is less-restrictive from the second setting of the one or more WLAN parameters.

4. The method of any one of claims 1-3, wherein the setting of the one or more WLAN parameters comprises a setting of one or more WLAN Media Access Control (MAC) parameters, a setting of one or more density-affected parameters, which are affected by a WLAN density, and/or a setting of one or more interference-affected parameters, which are affected by WLAN interference.

5. The method of any one of claims 1-4, wherein the setting of the one or more WLAN parameters comprises a setting of one or more WLAN channel access parameters to configure a channel access to be implemented by the WLAN STA to communicate the one or more transmissions in the WLAN.

6. The method of claim 5, wherein the one or more WLAN channel access parameters comprises one or more contention-based channel access parameters.

7. The method of any one of claims 1-6 comprising selectively enabling or disabling, based on the setting of the one or more WLAN parameters, one or more Media Access Control (MAC) mechanisms to be implemented by the WLAN STA to communicate the one or more transmissions in the WLAN.

8. The method of any one of claims 1-7 comprising configuring a first setting of the one or more WLAN parameters to be implemented by the WLAN STA to communicate one or more first transmissions in the WLAN based on first WLAN parameter-setting information from the parameter-setting server, and configuring a second setting of the one or more WLAN parameters to be implemented by the WLAN STA to communicate one or more second transmissions in the WLAN based on second WLAN parameter-setting information from the parameter-setting server, wherein the second setting of the one or more WLAN parameters is different from the first setting of the one or more WLAN parameters.

9. The method of any one of claims 1-8 comprising sending to the parameter-setting server location information corresponding to a location of the WLAN STA, wherein the WLAN parameter-setting information from the parameter-setting server comprises location-based WLAN parameter-setting information to configure the setting of the one or more WLAN parameters based on the location of the WLAN STA.

10. The method of any one of claims 1-9, wherein the WLAN STA comprises an Access Point (AP), the method comprising causing the AP to transmit non-AP configuration information to at least one non-AP STA in the WLAN, the non-AP configuration information to configure communications between the non-AP STA and the AP based on the setting of the one or more WLAN parameters.

11. The method of any one of claims 1-9, wherein the WLAN STA comprises a non Access Point (AP) (non-AP) STA, the method comprising causing the non-AP STA to configure communications between the non-AP STA and an AP of the WLAN based on the setting of the one or more WLAN parameters.

12. The method of any one of claims 1-11 comprising retrieving the WLAN parameter-setting information from the parameter-setting server according to a predefined periodicity.

13. An apparatus comprising a controller configured to cause a Wireless Local Area Network (WLAN) station (STA) to perform the method of any one of claims 1-12.

14. The apparatus of claim 13 comprising a radio to communicate the one or more transmissions in the WLAN, one or more antennas connected to the radio, and a processor to execute instructions of an operating system.

15. A product comprising one or more tangible computer-readable non-transitory storage media comprising instructions operable to, when executed by at least one processor, enable the at least one processor to cause a Wireless Local Area Network (WLAN) station (STA) to perform the method of any one of claims 1-12.
